# EUROPÄISCHE PATENTSCHRIFT

(11) **EP 1 142 941 B1**
(45) Veröffentlichungstag und Bekanntmachung des Hinweises auf die Patenterteilung: **06.06.2007**
(21) Anmeldenummer: 01106658.6
(22) Anmeldetag: 16.03.2001
(51) Int. Cl.: C08J 9/00, C08K 5/5333, C07F 9/40, C08L 75/04

(54) **Halogenfreier, flammwidriger Polyurethanhartschaum und ein Verfahren zu seiner Herstellung**
Halogen-free, flame retardant rigid polyurethane foam and its preparation process
Mousse rigide de polyuréthane, ignifugée, non halogénée et son procédé de préparation

(30) Priorität: 27.03.2000 DE 10014593
(43) Veröffentlichungstag der Anmeldung: 10.10.2001
(73) Patentinhaber: Clariant Produkte (Deutschland) GmbH, 65929 Frankfurt am Main (DE)
(72) Erfinder: Witte, Anne, Dr., 48268 Greven (DE); Krieger, Wilfried, 50321 Brühl (DE)

(56) Entgegenhaltungen:
- EP-A- 0 632 046
- EP-A- 0 665 251
- DATABASE CHEMABS [Online] CHEMICAL ABSTRACTS SERVICE, COLUMBUS, OHIO, US; YANCHUK, N. I.: "Formation reaction of phosphorus-containing polyurethanes" retrieved from STN Database accession no. 97:24306 CA XP002172650 & VOPR. KHIM. KHIM. TEKHNOL. (1981), 63, 66-9 ,
- DATABASE WPI Section Ch, Week 197715 Derwent Publications Ltd., London, GB; Class E11, AN 1977-26073Y XP002172651 & JP 52 027721 A (NISSAN CHEM IND LTD), 2. März 1977 (1977-03-02) & JP 52 027721 A (NISSAN CHEM IND LTD) 2. März 1977 (1977-03-02)

## Beschreibung

Die Erfindung betrifft einen halogenfreien, flammwidrigen Polyurethanhartschaum, ein Verfahren zu seiner Herstellung sowie die Verwendung von oxalkylierten Alkylphosphonsäuren im Gemisch mit Ammoniumpolyphosphat zur Herstellung von solchen halogenfreien flammwidrigen Polyurethanhartschäumen.

Polyurethanhartschaumstoffe werden in vielen Bereichen, wie in der Kühlmöbelindustrie, als Dämmstoffe im Bau, etwa für Heizungs- und Verbundelemente, als Verpackungen und allgemein als technische Dämmung eingesetzt. Zum Erreichen der in diesen Branchen gewünschten und teilweise vom Gesetzgeber geforderten hohen Flammschutzanforderungen müssen Polyurethanhartschaumstoffe in der Regel mit Flammschutzmitteln ausgerüstet werden. Hierzu sind eine Vielzahl unterschiedlicher Flammschutzmittel bekannt und auch kommerziell erhältlich. Der Verwendung solcher Flammschutzmittel stehen allerdings vielfach erhebliche anwendungstechnische Probleme und toxikologische Bedenken entgegen.

So treten bei Verwendung fester Flammschutzmittel wie beispielsweise Melamin, Ammoniumpolyphosphat und Ammoniumsulfat dosiertechnische Probleme auf, die häufig aufwendige Umbauten und Anpassungen der Verschäumanlagen notwendig machen.

Aus ökotoxikologischen Gründen sowie aufgrund verbesserter Brandnebenerscheinungen bezüglich Rauchgasdichte und Rauchgastoxizität werden halogenfreie Flammschutzmittelsysteme grundsätzlich bevorzugt.

Für Polyurethanweichschaumsysteme können hydroxylgruppentragende oligomere Phosphorsäureester (DE-OS 43 42 972) als Flammschutzmittel eingesetzt werden. Solche Verbindungen, deren Eigenschaften und Wirkungen lassen sich bekannterweise nicht auf Polyurethanhartschaumsysteme übertragen.

Die EP-A-665 251 beschreibt halogen freie flammwidrige Polyurethanschaumstoffe mit einer Kombination aus Ammoniumpolyphosphat und alkylierten Alkylphosphonsäuren als Flammschutzmittel

Zwar können Polyurethanweich- und hartschaumsysteme grundsätzlich in etwa die gleiche Raumdichte und Zusammensetzung aufweisen jedoch sind die Polyurethanweichschäume nur gering vernetzt und weisen bei Druckbelastung nur einen geringen Verformungswiderstand auf.

Im Gegensatz dazu besteht die Struktur der Polyurethanhartschäume aus hoch vernetzten Einheiten und der Polyurethanhartschaum zeigt bei Druckbelastung einen sehr hohen Verformungswiderstand. Der typische Polyurethanhartschaum ist geschlossenzellig und weist nur eine niedrige Wärmeleitzahl auf.

Primär wird bei der Herstellung von Polyurethanen, die über die Reaktion von Polyolen mit Isocyanaten abläuft, über die Art und Chemie des Polyols (Funktionalität) die spätere Schaumstrukur und seine Eigenschaften beeinflusst.

Es ist Aufgabe der vorliegenden Erfindung, einen flammwidrigen Polyurethanhartschaum sowie ein Verfahren zu seiner Herstellung zur Verfügung zu stellen, daß die vorgenannten Nachteile vermeidet und bei dem Produkte erhalten werden, die den notwendigen und vorgegebenen Anforderungen an Flammwidrigkeit, Verarbbeitbarkeit, niedrige Rauchgasdichte und geringe Rauchgastoxizität genügen.

Die vorliegende Aufgabe wird gelöst durch einen Polyurethanhartschaum der eingangs genannten Art, dadurch gekennzeichnet, daß er als Flammschutzmittel eine Kombination aus oxalkylierten Alkylphosphonsäuren und Ammoniumpolyphosphat enthält, wobei die oxalkylierten Alkylphosphonsäuren der allgemeinen Formel I entsprechen, 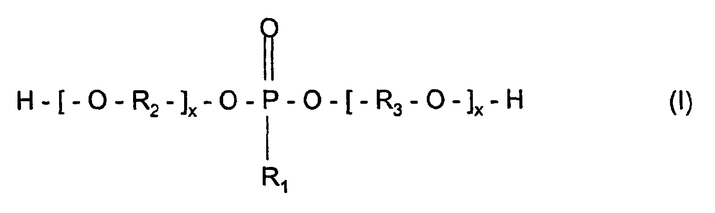 in der
R₁ einen Methyl-, Ethyl- oder Propylrest
R₂, R₃ gleich oder verschieden sind und für einen Methylen-, Ethylen- oder Propylenrest stehen und
x eine Zahl von 1,2 bis 1,9 bedeutet

Bevorzugt sind in dem erfindungsgemäßen Polyurethanhartschaum die oxalkylierten Alkylphosphonsäuren und Ammoniumpolyphosphat im Gewichtserhältnis von 1 : 2 bis 2 : 1 enthalten.

Bevorzugt sind die oxalkylierten Alkylphosphonsäuren und Ammoniumpolyphosphat im Gewichtserhältnis 1 : 1 enthalten.

Bevorzugt enthält der halogenfreie, flammwidrige Polyurethanhartschaum das Flammschutzmittel in einer Menge von 0,1 bis 30 Gew.-%, bezogen auf den ausgehärteten Polyurethanhartschaum.

Besonders bevorzugt enthält er das Flammschutzmittel in einer Menge von 3 bis 5 Gew.-%, bezogen auf den ausgehärteten Polyurethanhartschaum.

Bevorzugt weist der Polyurethanhartschaum ein Raumgewicht von 25 bis 80 kg/m³ auf.

Besonders bevorzugt weist der Polyurethanhartschaum ein Raumgewicht von 30 bis 50 kg/m³ auf.

Die vorliegende Aufgabe wird auch gelöst durch ein Verfahren zur Herstellung eines halogenfreien, flammwidrigen Polyurethanhartschaums aus Polyisocyanaten und Polyolen in Gegenwart von Treibmitteln, Stabilisatoren, Aktivatoren und/oder weiteren üblichen Hilfs- und Zusatzstoffen, dadurch gekennzeichnet, daß man organische Polyisocyanate mit Verbindungen mit mindestens 2 gegenüber Isocyanaten reaktionsfähigen Wasserstoffatomen in Gegenwart von Treibmitteln, Stabilisatoren und einer Flammschutzmittel-Kombination aus oxalkylierten Alkylphosphonsäuren der allgemeinen Formel I und Ammoniumpolyphosphat umsetzt.

Bevorzugt handelt es sich bei dem Treibmittel um Wasser und/oder Pentan.

Bevorzugt handelt es sich bei den oxethylierten Alkylphosphonsäuren der allgemeinen Formel I um bei Verarbeitungstemperatur flüssige Verbindungen. Unter Verarbeitungstemperatur wird dabei die Temperatur verstanden, bei der die Ausgangskomponenten vermischt werden.

Bevorzugt handelt es sich bei den oxethylierten Alkylphosphonsäuren der allgemeinen Formel I um gegenüber Isocyanaten reaktiven Verbindungen.

Die Erfindung betrifft auch die Verwendung von oxethylierten Alkylphosphonsäuren der allgemeinen Formel I im Gemisch mit Ammoniumpolyphosphat als halogenfreie Flammschutzmittel zur Herstellung von flammwidrigen Polyurethanhartschaumsystemen.

### Zu den Polyurethanhartschäumen:

Es handelt sich dabei vorwiegend um Urethan- und/oder Isocyanurat- und/oder Allophanat- und/oder Uretdion- und/oder Harnstoff- und/oder Carbodiimidgruppen aufweisende Schaumstoffe. Die erfindungsgemäße Verwendung erfolgt vorzugsweise bei der Herstellung von Polyurethan- und Polyisocyanurat-Schaumstoffen.

### Für die Herstellung der Schaumstoffe auf Isocyanatbasis werden eingesetzt:

Als Ausgangskomponenten: Aliphatische, cycloaliphatische, araliphatische, aromatische und heterocyclische Polyisocyanate (z.B. W. Siefken in Justus Liebigs Annalen der Chemie, 562, S. 75-136), beispielsweise solche der Formel Q(NCO)ₙ, in der n = 2 bis 4, vorzugsweise 2 bis 3, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen, bedeuten, z.B. solche Polyisocyanate, wie sie in der DE-OS 28 32 253, Seiten 10 bis 11, beschrieben werden. Besonders bevorzugt werden in der Regel die technisch leicht zugänglichen Polyisocyanate, die sich vom 2,4- und/oder 2,6-Toluylendiisocyanat bzw. von 4,4'- und/oder 2,4'-Diphenylmethandiisocyanat ableiten.

Ausgangskomponenten sind ferner Verbindungen mit mindestens zwei gegenüber Isocyanaten reaktionsfähigen Wasserstoffatomen mit einem Molekulargewicht von 400 bis 10.000 ("Polyolkomponente"). Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen, speziell solche vom Molekulargewicht 1000 bis 6000, vorzugsweise 2000 bis 6000, in der Regel 2 bis 8, vorzugsweise aber 2 bis 6 Hydroxylgruppen aufweisende Polyether und Polyester sowie Polycarbonate und Polyesteramide, wie sie für die Herstellung von homogenen und von zellförmigen Polyurethanen an sich bekannt sind und wie sie etwa in der DE-OS 28 32 253 beschrieben werden. Die mindestens zwei Hydroxylgruppen aufweisenden Polyether und Polyester sind erfindungsgemäß bevorzugt.

Gegebenenfalls sind weitere Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiogruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4 gegenüber Isocyanaten reaktionsfähige Wasserstoffatome auf. Beispiele hierfür werden ebenfalls in der DE-OS 28 32 253 beschrieben.

Gegebenenfalls werden Hilfs- und Zusatzmittel mitverwendet wie Katalysatoren der an sich bekannten Art, oberflächenaktive Zusatzstoffe, wie Emulgatoren und Schaumstabilisatoren, Reaktionsverzögerer, z.B. sauer reagierende Stoffe wie Salzsäure oder organische Säurehalogenide, ferner Zellregler der an sich bekannten Art wie Paraffine oder Fettalkohole und Dimethylpolysiloxane sowie Pigmente oder Farbstoffe und weitere Flammschutzmittel, Kernverfärbungsinhibitoren, ferner Stabilisatoren gegen Alterungs- und Witterungseinflüsse, Weichmacher und fungistatisch und bakteriostatisch wirkende Substanzen sowie Füllstoffe, wie Bariumsulfat, Kieselgur, Ruß- oder Schlämmkreide (DE-OS 27 32 292).

Weitere Beispiele von gegebenenfalls erfindungsgemäß mitzuverwendenden oberflächenaktiven Zusatzstoffen und Schaumstabilisatoren sowie Zellreglern, Reaktionsverzögerem, Stabiliatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, Carl Hanser Verlag, München, 1993, auf den Seiten 104 bis 123 beschrieben. Polyisocyanuratschaumstoffe werden nach den hierfür bekannten Verfahren und Bedingungen hergestellt.

Die Erfindung wird durch die nachstehenden Beispiele erläutert.

Für die Versuche wurden die folgenden Bestandteile eingesetzt:
OMPS: oxethylierte Methylphosphonsäure mit einem Phosphor-Gehalt von 12,7 Gew.-%, einer Hydroxylzahl von 430 mg KOH/g und einer Viskosität von 275 mPa s bei 25 °C.
OEPS: oxethylierte Ethylphosphonsäure mit einem Phosphor-Gehalt von 12,2 Gew.-%, einer Hydroxylzahl von 447 mg KOH/g und einer Viskosität von 190 mPa s bei 25 °C.
OPPS: oxethylierte Propylphosphonsäure mit einem Phosphor-Gehalt von 12,3 Gew.-%, einer Hydroxylzahl von 421 mg KOH/g und einer Viskosität von 160 mPa s bei 25 °C.
^{®}Exolit AP422: Ammoniumpolyphosphat (Hersteller jeweils: Clariant GmbH)

| | |
|---|---|
| Polyetherpolyol | ^{®}Lupranol 3323, Fa. BASF, ein Polyether-Polyol mit einer Hydroxylzahl von 340 mg KOH/g |
| Katalysatoren | N,N-Dimethylcyclohexylamin, Fa. Merck-Schuchardt |
| Stabilisator | ^{®}Tegostab B8466, Th. Goldschmidt AG, ein polyethermodifiziertes Polysiloxan |
| Isocyanat | Caradate 30, Fa. ICI-Huntsman |

### Beispiele 1 bis 3

Es wurde ein wassergetriebener Polyurethanhartschaum (Index 110) mit einem Raumgewicht von ca. 40 kg/m³ nach folgender Rezeptur hergestellt (Angaben in Gewichtsteilen):

| Komponente | Beispiel 1 | Beispiel 2 | Beispiel 3 (Vergleich) |
|---|---|---|---|
| Polyol Lupranol 3323 | 100,0 | 100,0 | 100,0 |
| Flammschutzmittel | 20 Exolit AP422 | 20 Exolit AP422 | 20 Exolit AP422 |
| | 20 OMPS | 20 OEPS | 25 Levagard |
| | | | 40SON |
| Katalysator DMCHA | 2,5 | 2,5 | 2,5 |
| Stabilisator Tegostab B 8466 | 3,0 | 3,0 | 3,0 |
| Treibmittel Wasser / Pentan | 2,3/9 | 2,3/9 | 2,3/9 |
| Isocyanat Caradate 30 | Index 110 | Index 110 | Index 110 |

Für die Herstellung des Polyurethanhartschaumes wurden die Komponenten in der vorgegebenen Reihenfolge gemischt und verschäumt.

### Prüfung des Brandverhaltens

Gemäß den Anforderungen der DIN 4102 erfolgt die Klassifizierung des Brandverhaltens nach dem Kleinbrenner-Test. Werden die Anforderungen im Kleinbrenner-Test erfüllt, so erfolgt die Einstufung in die Klasse B2. Erreichen die Flammenspitzen innerhalb von 15 Sekunden die Markierung, die 150 mm oberhalb des Flammangriffpunktes an der vertikal angeordneten plattenförmigen Probe angebracht ist, so gilt die geprüfte Probe als leichtentflammbar, d.h. sie wird der Baustoffklasse B3 zugeordnet.

Bei den vorgenannten, erfindungsgemäßen Polyurethanhartschäumen wurde in allen Fällen der B2-Test nach DIN 4102 bestanden. Eine zusätzliche Messung der Rauchgasdichte sowohl unter schwelenden als auch unter flammenden Bedingungen ergab, daß diese um einen Faktor 3 bis 10 gegenüber solchen Polyurethanhartschäumen verringert werden konnte, die mit halogenhaltigen Flammschutzmitteln anstatt der Mischung aus Ammoniumpolyphosphat und den oxalkylierten Alkylphosphonsäuren ausgerüstet wurden.

Mit dem Produkt des Beispiels 3 (Vergleich) wurde der B2-Test nicht bestanden.

## Patentansprüche

1. Halogenfreier, flammwidriger Polyurethanhartschaum, **dadurch gekennzeichnet, daß** er als Flammschutzmittel eine Kombination aus oxalkylierten Alkylphosphonsäuren der allgemeinen Formel I 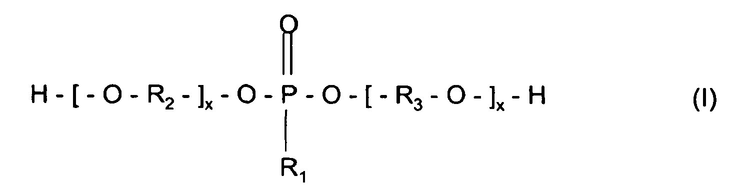 in der
R₁ einen Methyl-, Ethyl- oder Propylrest
R₂, R₃ gleich oder verschieden sind und für einen Methylen-, Ethylen- oder Propylenrest
stehen und x eine Zahl von 1,2 bis 1,9 bedeutet, und Ammoniumpolyphosphat enthält.

2. Halogenfreier, flammwidriger Polyurethanhartschaum nach Anspruch 1, **dadurch gekennzeichnet, daß** die oxalkylierten Alkylphosphonsäuren und Ammoniumpolyphosphat im Gewichtserhältnis von 1 : 2 bis 2 : 1 enthalten sind.

3. Halogenfreier, flammwidriger Polyurethanhartschaum nach Anspruch 1 oder 2, **dadurch gekennzeichnet, daß** die oxalkylierten Alkylphosphonsäuren und Ammoniumpolyphosphat im Gewichtserhältnis von 1 : 1 enthalten sind.

4. Halogenfreier, flammwidriger Polyurethanhartschaum nach einem oder mehreren der Ansprüche 1 bis 3, **dadurch gekennzeichnet, daß** er das Flammschutzmittel in einer Menge von 0,1 bis 30 Gew.-%, bezogen auf den ausgehärteten Polyurethanhartschaum, enthält.

5. Halogenfreier, flammwidriger Polyurethanhartschaum nach einem oder mehreren der Ansprüche 1 bis 4, **dadurch gekennzeichnet, daß** er das Flammschutzmittel in einer Menge von 3 bis 15 Gew.-%, bezogen auf den ausgehärteten Polyurethanhartschaum, enthält.

6. Halogenfreier, flammwidriger Polyurethanhartschaum nach einem oder mehreren der Ansprüche 1 bis 5, **dadurch gekennzeichnet, daß** er ein Raumgewicht von 25 bis 80 kg/m³ aufweist.

7. Halogenfreier, flammwidriger Polyurethanhartschaum nach einem oder mehreren der Ansprüche 1 bis 6, **dadurch gekennzeichnet, daß** er ein Raumgewicht von 30 bis 50 kg/m³ aufweist.

8. Verfahren zur Herstellung eines halogenfreien, flammwidrigen Polyurethanhartschaums nach einem oder mehreren der Ansprüche 1 bis 7 aus Polyisocyanaten und Polyolen in Gegenwart von Treibmitteln, Stabilisatoren, Aktivatoren und/oder weiteren üblichen Hilfs- und Zusatzstoffen, **dadurch gekennzeichnet, daß** man organische Polyisocyanate mit Verbindungen mit mindestens 2 gegenüber Isocyanaten reaktionsfähigen Wasserstoffatomen in Gegenwart von Treibmitteln, Stabilisatoren, einer Flammschutzmittel-Kombination aus oxalkylierten Alkylphosphonsäuren der allgemeinen Formel I und Ammoniumpolyphosphat umsetzt.

9. Verfahren nach Anspruch 8, **dadurch gekennzeichnet, daß** es sich bei dem Treibmittel um Wasser und/oder Pentan handelt.

10. Verfahren nach Anspruch 8 oder 9, **dadurch gekennzeichnet, daß** es sich bei den oxethylierten Alkylphosphonsäuren der allgemeinen Formel I um bei Verarbeitungstemperatur flüssige Verbindungen handelt.

11. Verfahren nach einem oder mehreren der Ansprüche 8 bis 10, **dadurch gekennzeichnet, daß** es sich bei den oxethylierten Alkylphosphonsäuren der allgemeinen Formel I um gegenüber Isocyanaten reaktive Verbindungen handelt.

## Claims

1. A halogen-free, flame-retardant rigid polyurethane foam, wherein a combination of oxalkylated alkylphosphonic acids of the formula I 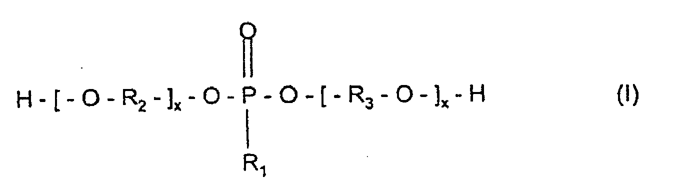 where
R₁ is a methyl, ethyl or propyl radical,
R₂ and R₃ are identical or different and are a methylene, ethylene or propylene radical and
x is a number from 1.2 to 1.9.and ammonium polyphosphate is present as flame retardant.

2. The halogen-free, flame-retardant rigid polyurethane foam as claimed in claim 1, wherein the ratio by weight in which the oxalkylated alkylphosphonic acids and ammonium polyphosphate are present is from 1:2 to 2:1.

3. The halogen-free, flame-retardant rigid polyurethane foam as claimed in claim 1 or 2, wherein the ratio by weight in which the oxalkylated alkylphosphonic acids and ammonium polyphosphate are present is 1:1.

4. The halogen-free, flame-retardant rigid polyurethane foam as claimed in one or more of claims 1 to 3, which comprises, based on the fully cured rigid polyurethane foam, from 0.1 to 30% by weight of the flame retardant.

5. The halogen-free, flame-retardant rigid polyurethane foam as claimed in one or more of claims 1 to 4, which comprises, based on the fully cured rigid polyurethane foam, from 3 to 15% by weight of the flame retardant.

6. The halogen-free, flame-retardant rigid polyurethane foam as claimed in one or more of claims 1 to 5, which has a density of from 25 to 80 kg/m³.

7. The halogen-free, flame-retardant rigid polyurethane foam as claimed in one or more of claims 1 to 6, which has a density of from 30 to 50 kg/m3.

8. A process for producing a halogen-free, flame-retardant rigid polyurethane foam as claimed in one or more of claims 1 to 7 from polyisocyanates and polyols in the presence of blowing agents, stabilizers, activators and/or other conventional auxiliaries and additives, which comprises reacting organic polyisocyanates with compounds having at least 2 hydrogen atoms capable of reaction with isocyanates, in the presence of blowing agents, stabilizers, and a flame-retardant combination of oxalkylated alkylphosphonic acids of the formula I and ammonium polyphosphate.

9. The process as claimed in claim 8, wherein the blowing agent is water and/or pentane.

10. The process as claimed in claim 8 or 9, wherein the oxalkylated alkylphosphonic acids of the formula I are compounds liquid at processing temperature.

11. The process as claimed in one or more of claims 8 to 10, wherein the oxalkylated alkylphosphonic acids of the formula I are compounds reactive toward isocyanates.

## Revendications

1. Mousse dure de polyuréthanne ininflammable exempte d'halogènes, **caractérisée en ce qu'**elle contient, en tant qu'agent ignifuge, une combinaison d'acides alkylphosphoniques alcoxylés de formule générale I 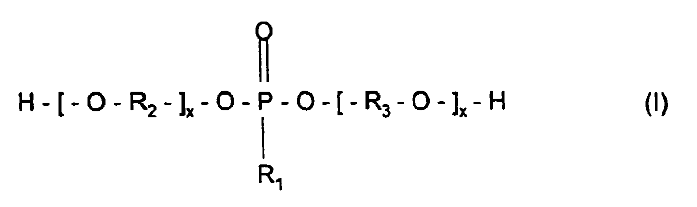 dans laquelle
R₁ représente un groupe méthyle, éthyle ou propyle
R₂, R₃ sont identiques ou différents et représentent un groupe méthylène, éthylène ou propylène, et
x représente un nombre de 1,2 à 1,9,
et de polyphosphate d'ammonium.

2. Mousse dure de polyuréthanne ininflammable exempte d'halogènes selon la revendication 1, **caractérisée en ce que** les acides alkylphosphoniques alcoxylés et le polyphosphate d'ammonium sont contenus dans un rapport pondéral de 1:2 à 2:1.

3. Mousse dure de polyuréthanne ininflammable exempte d'halogènes selon la revendication 1 ou 2, **caractérisée en ce que** les acides alkylphosphoniques alcoxylés et le polyphosphate d'ammonium sont contenus dans un rapport pondéral de 1:1.

4. Mousse dure de polyuréthanne ininflammable exempte d'halogènes selon l'une quelconque ou plusieurs des revendications 1 à 3, **caractérisée en ce qu'**elle contient l'agent ignifuge à raison de 0,1% à 30% en poids par rapport à la mousse dure de polyuréthanne durcie.

5. Mousse dure de polyuréthanne ininflammable exempte d'halogènes selon l'une quelconque ou plusieurs des revendications 1 à 4, **caractérisée en ce qu'**elle contient l'agent ignifuge à raison de 3% à 15% en poids par rapport à la mousse dure de polyuréthanne durcie.

6. Mousse dure de polyuréthanne ininflammable exempte d'halogènes selon l'une quelconque ou plusieurs des revendications 1 à 5, **caractérisée en ce qu'**elle présente une masse volumique de 25 à 80 kg/m³.

7. Mousse dure de polyuréthanne ininflammable exempte d'halogènes selon l'une quelconque ou plusieurs des revendications 1 à 6, **caractérisée en ce qu'**elle présente une masse volumique de 30 à 50 kg/m³.

8. Procédé de préparation d'une mousse dure de polyuréthanne ininflammable exempte d'halogènes selon l'une quelconque ou plusieurs des revendications 1 à 7, à partir de polyisocyanates et de polyols en présence d'agents moussants, de stabilisants, d'activateurs et/ou d'autres additifs ou adjuvants classiques, **caractérisé en ce que** l'on fait réagir des polyisocyanates organiques avec des composés contenant au moins 2 atomes d'hydrogène réactifs envers les isocyanates, en présence d'agents moussants, de stabilisants, d'une combinaison d'agent ignifuge composée d'acides alkylphosphoniques alcoxylés de formule générale I et de polyphosphate d'ammonium.

9. Procédé selon la revendication 8, **caractérisé en ce que** l'agent moussant est de l'eau et/ou du pentane.

10. Procédé selon la revendication 8 ou 9, **caractérisé en ce que** les acides alkylphosphoniques éthoxylés de formule générale I sont des composés liquides à la température de traitement.

11. Procédé selon l'une quelconque ou plusieurs des revendications 8 à 10, **caractérisé en ce que** les acides alkylphosphoniques éthoxylés de formule générale I sont des composés réactifs envers les isocyanates.
